# FASCICULE DE BREVET EUROPEEN

(11) **EP 2 724 943 B1**
(45) Date de publication et mention de la délivrance du brevet: **26.06.2019**
(21) Numéro de dépôt: 13188123.7
(22) Date de dépôt: 10.10.2013
(51) Int. Cl.: B64G 1/22, F16C 11/12, B64G 1/44, E05D 1/02, B25J 17/02

(54) **SYSTÈME DE MOTORISATION À COUPLE ADAPTÉ POUR ARTICULATION À MOYENS D'ENROULEMENT CROISES**
MOTORISIERUNGSSYSTEM MIT ANGEPASSTEM DREHMOMENT FÜR EIN GELENK MIT GEKREUZTEN AUFROLLMITTELN
ADAPTED-TORQUE MOTORISATION SYSTEM FOR ARTICULATION WITH CROSSED WINDING MEANS

(30) Priorité: 26.10.2012 FR 1202859
(43) Date de publication de la demande: 30.04.2014
(73) Titulaire: Thales, 92400 Courbevoie (FR)
(72) Inventeur: Baudasse, Yannick, 06150 Cannes-La-Bocca (FR); Vezain, Stéphane, 06150 Cannes-La-Bocca (FR); Gafari, Yasmina, 06150 Cannes-La-Bocca (FR)
(74) Mandataire: Esselin, Sophie

(56) Documents cités:
- EP-A1- 0 620 466
- EP-A1- 2 336 031
- FR-A1- 2 902 763
- FR-A1- 2 968 234
- US-A- 3 525 483
- US-A- 3 945 053

## Description

La présente invention concerne les systèmes de motorisation d'éléments. Elle s'applique notamment au domaine des mécanismes de déploiement d'appendices spatiaux, tels que des antennes ou des générateurs solaires par exemple.

Dans les systèmes de motorisation précités, des éléments, par exemple des ferrures, sont typiquement mis en mouvement les uns par rapport aux autres autour d'articulations. Ces systèmes comprennent ainsi des lignes d'articulations utilisant généralement des composants de motorisation du type ressorts de torsion, ressorts spiraux ou joints de Carpentier, permettant de lutter contre les couples résistants et de garantir les marges nécessaires en termes de couples générés en vue d'assurer le déploiement complet des appendices.

Dans ce contexte, les composants de motorisation connus présentent un couple de motorisation évolutif ou variable impliquant une sur-motorisation qui occasionne des chocs en fin de déploiement.

Ces chocs peuvent être importants et générer des dégâts sur les appendices spatiaux en fin de déploiement, ainsi que des couples parasites néfastes au pilotage de l'engin spatial. Pour pallier ce problème, les structures déployables peuvent être dimensionnées et renforcées de manière à pouvoir résister aux chocs de fin de course générés lors de leur déploiement, mais cette solution n'est pas satisfaisante et entraîne notamment un poids accru pour la structure complète.

Certains développements ont mené à la mise au point de mécanismes de déploiement à couple résistif quasi-nul. De tels mécanismes, tels que la ligne d'articulations décrite dans la demande de brevet FR 2635077, présentent l'avantage de ne nécessiter que peu de puissance de motorisation et engendrent des chocs de fin de course minimisés. D'autres mécanismes sont le fruit d'améliorations apportées au mécanisme précédent, en termes de masse et de volume notamment. Un tel mécanisme de déploiement est divulgué dans la demande de brevet FR 06 05653 (N ° de publication: FR 2 902 763 A1), qui est considéré comme l'art antérieur le plus proche et décrit les caractéristiques du préambule de la revendication 1.

Les mécanismes connus, tels que ceux décrits dans les demandes de brevets FR 2635077 et FR 0605653 précitées, ont une capacité angulaire de déploiement limitée à 180°. Par ailleurs, leur cinématique d'ensemble, du fait de leur structure, engendre des couples de motorisation très irréguliers. Enfin, la vitesse de déploiement des mécanismes de déploiement connus, comme déjà évoqué, entraîne une restitution d'énergie en fin de course, donc un choc, car ladite vitesse de déploiement n'est pas régulée.

Pour corriger ces inconvénients, il a été proposé un dispositif de motorisation à couple contrôlé, décrit dans la demande de brevet publiée sous la référence FR 2968234. Un tel dispositif permet de présenter un couple résistant quasi-nul, et se fonde sur l'utilisation de pistes flexibles déjà existantes dans le système, pour réaliser la motorisation. Une forme spécifique est donnée aux pistes flexibles de manière à permettre un excentrement du point de contact entre les pistes flexibles par rapport au point de croisement de moyens d'enroulement tels que des lames souples enroulées ou bien des câbles, formant un élément de liaison entre deux cylindres d'enroulement sensiblement parallèles formant ferrures, auxquels sont reliés différents composants du système. De la sorte, un couple dépendant de la distance entre le point de contact et le point de croisement précités provoque la rotation des pistes flexibles entre elles, et ainsi la rotation des ferrures entre elles. Par « point de croisement » entre les moyens d'enroulement formant élément de liaison, il est entendu de manière plus large l'axe sensiblement parallèle aux axes longitudinaux ou axes de révolution des ferrures, passant tout à la fois au travers des deux moyens d'enroulement.

Dans le dispositif précité, une bonne maîtrise du couple de motorisation suppose une bonne maîtrise de la position du point de contact entre les pistes flexibles, or il peut s'avérer en pratique peu aisé de maîtriser ainsi la position du point de contact entre les pistes flexibles.

Un but de la présente invention est notamment de pallier les inconvénients précités. Ainsi, il est proposé par la présente invention que l'excentrement du point de contact entre les pistes flexibles par rapport au point de croisement des moyens d'enroulement soit non seulement assuré par une forme spécifique des pistes flexibles, mais également par une configuration spécifique des moyens d'enroulement autour des cylindres d'enroulement.

Plus précisément, l'invention a pour objet un dispositif de motorisation comprenant :
- deux cylindres d'enroulement sensiblement parallèles, des moyens d'enroulement formant élément de liaison de forme longitudinale, les moyens d'enroulement étant aptes à maintenir une distance prédéterminée entre les deux cylindres d'enroulement et étant enroulés autour les deux cylindres d'enroulement, les moyens d'enroulement présentant par conséquent un point de croisement entre deux sections sensiblement linéaires de l'élément de liaison situées entre les deux cylindres d'enroulement,
- au moins deux pistes flexibles, un ensemble comprenant un cylindre d'enroulement des deux cylindres d'enroulement et une piste flexible formant une ferrure, une piste flexible des au moins deux pistes flexibles étant fixée sur chaque cylindre d'enroulement, les pistes flexibles étant disposées en vis-à-vis et présentant un point de contact, un effort de précontrainte s'appliquant audit point de contact des pistes flexibles sous l'effet des moyens d'enroulement, les pistes flexibles présentant une forme de spirale, la forme de la spirale étant configurée de telle manière que le point de contact entre les deux pistes flexibles soit excentré par rapport au point de croisement des moyens d'enroulement, le point de contact et le point de croisement ne se trouvant pas alignés sur un même axe parallèle aux axes de révolution des cylindres d'enroulement, de sorte qu'un couple dépendant de la distance entre le point de contact et le point de croisement est appliqué, le couple étant apte à provoquer la rotation des ferrures entre elles, le dispositif de motorisation étant caractérisé en ce que chaque cylindre d'enroulement comprend une première circonférence sur une première portion déterminée, et une seconde circonférence sur une seconde portion déterminée, la première circonférence de chaque cylindre d'enroulement étant différente de la seconde circonférence de chaque cylindre d'enroulement, chaque section linéaire de l'élément de liaison s'enroulant sur la première portion du premier cylindre d'enroulement et sur la seconde portion du second cylindre d'enroulement, ou sur la seconde portion du premier cylindre d'enroulement et sur la première portion du second cylindre d'enroulement.

Dans un mode de réalisation de l'invention, ladite première portion et ladite seconde portion du premier cylindre d'enroulement et du second cylindre d'enroulement peuvent être à circonférence circulaire.

Dans un mode de réalisation de l'invention, les moyens d'enroulement et les cylindres d'enroulement peuvent être configurés de sorte que la valeur d'une première distance entre le point de croisement et un plan horizontal comprenant les axes de révolution respectifs du premier et du second cylindres d'enroulement soit égale à une première valeur déterminée, pour contrôler le couple s'exerçant au point de contact entre les ferrures.

Dans un mode de réalisation de l'invention, la forme de la spirale des pistes flexibles peut être en outre configurée de manière à ce qu'une seconde distance entre le point de contact et le plan comprenant les axes de révolution respectifs du premier et du second cylindres d'enroulement soit égale à une seconde valeur déterminée, la distance égalant la somme de la première distance et de la seconde distance déterminant le couple s'exerçant sur les ferrures.

La présente invention a également pour objet un système déployant pour satellite artificiel, comprenant au moins un premier appendice déployable et un second appendice déployable, caractérisé en ce qu'il comprend en outre un dispositif de motorisation selon l'un quelconque des modes de réalisation présentés, les appendices déployables étant fixés sur chaque ferrure.

D'autres caractéristiques et avantages de l'invention apparaîtront à l'aide de la description qui suit faite en regard des dessins annexés qui représentent :
- la figure 1 : un schéma d'un système de motorisation connu de l'état de la technique, dans des positions stockée et déployée ;
- les figures 2A et 2B : un schéma illustrant respectivement un dispositif de motorisation selon un exemple de réalisation de l'invention, et un bilan des forces s'y appliquant.

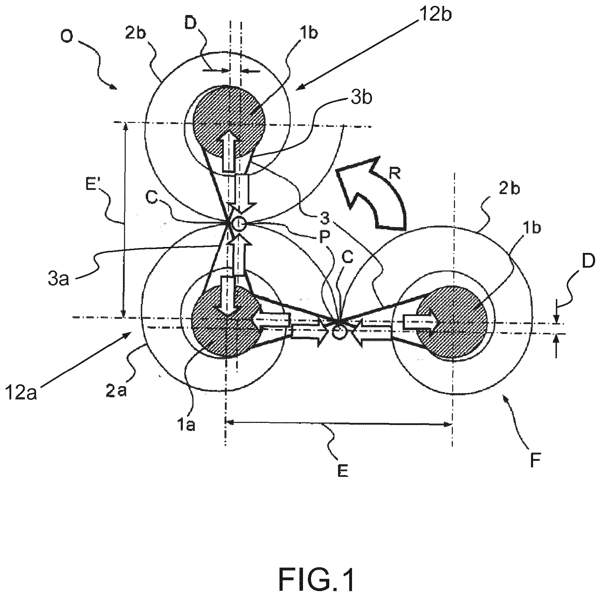

La figure 1 présente un schéma illustrant un système de motorisation tel que décrit dans la demande de brevet FR 2968234 précitée. Un système de motorisation comprend des cylindres d'enroulement 1a, 1b sensiblement parallèles et maintenus en position par des moyens d'enroulement 3 tels que des lames souples, ou par tout autre élément adapté, comme par exemple des câbles. Les moyens d'enroulement 3 sont enroulés en forme de huit autour des cylindres d'enroulement 1a, 1b ; pris séparément, chaque moyen d'enroulement comprend notamment une portion linéaire 3a ou 3b, chaque portion linéaire 3a, 3b étant prolongée par une portion des moyens d'enroulement s'enroulant autour de chacun des cylindres d'enroulement 1a, 1b. Les moyens d'enroulement se croisent en un point de croisement C.

Des pistes flexibles 2a, 2b, sont respectivement connectées à chacun des cylindres d'enroulement 1a, 1b à section circulaire. Les pistes flexibles 2a, 2b sont disposées en vis-à-vis et en contact l'une de l'autre. Un ensemble comprenant un cylindre d'enroulement 1a, 1b et une piste flexible 2a, 2b associée forme une ferrure 12a, 12b. Les moyens d'enroulement 3 induisent un effort de précontrainte s'appliquant au point de contact P entre les pistes flexibles 2a, 2b. Du fait de la géométrie à base circulaire des cylindres d'enroulement 1a, 1b et des pistes flexibles, le point de contact P entre les pistes flexibles 2a, 2b et le point de croisement C des moyens d'enroulement 3 sont alignés sur un plan orthogonal au plan passant par les deux axes de révolution des cylindres d'enroulement 1a, 1b, et parallèle et équidistant des axes de révolution des deux cylindres d'enroulement 1a, 1b. Des appendices, tels que des générateurs solaires, peuvent être fixés sur chaque ensemble cylindre d'enroulement / piste flexible 1a-2a / 1b-2b.

Les pistes flexibles 2a, 2b peuvent être constituées de pistes flexibles en forme de spirale. Le profil des pistes flexibles 2a, 2b peut également être formé par plusieurs portions de spirales, et/ou par plusieurs portions de profil circulaire. La forme spécifique de spirale permet d'excentrer le point de contact P inter-pistes flexibles 2a, 2b par rapport au point de croisement C des moyens d'enroulement 3. Le point de contact P et le point de croisement C ne se trouvent pas sur le même axe parallèle aux axes de révolution des cylindres d'enroulement 1a, 1b. Cet excentrement d'une distance D, du point de contact P par rapport au point de croisement C, entraîne l'excentrement de l'effort de précontrainte induit par les moyens d'enroulement 3 et s'appliquant au point de contact P. De ce fait, un couple R est produit entre le point de contact P et le point de croisement C induisant la rotation des ferrures 12a, 12b, comprenant les pistes flexibles 2a, 2b et les cylindres d'enroulement 1a, 1b. La rotation des ferrures 12a, 12b entre elles, du fait de la forme en spirale des pistes flexibles 2a, 2b, entraîne une variation de la déformation des pistes flexibles 2a, 2b et plus précisément de la flèche au point de contact, l'entraxe des cylindres d'enroulement 1a, 1b, étant quant à lui constant, la longueur E de l'entraxe en position fermée F égalant la longueur E' de l'entraxe en position ouverte O. du fait de la cylindricité à section circulaire des cylindres d'enroulement 1a et 1b

Le couple R peut être ajusté au moyen des choix effectués sur la forme de la spirale et sur les caractéristiques physiques des pistes flexibles 2a, 2b, en particulier leur élasticité et leur rigidité. Pour augmenter le couple R exercé sur les pistes flexibles 2a, 2b, il est possible d'augmenter le déport du point de contact P par rapport au point de croisement C en réalisant une spirale avec un angle d'ouverture important, ou d'augmenter l'effort exercé au point de contact P en réalisant une piste flexible plus raide. Pour augmenter l'effort exercé au point de contact C, il est encore possible d'augmenter la flèche des pistes flexibles 2a, 2b.

Pour générer un couple R constant pendant la phase de déploiement, une forme de spirale d'Archimède peut être préférée.

Le couple R de motorisation peut également être adapté afin de compenser certains couples de frottement variables introduits par des éléments externes à l'articulation. Il peut s'agir typiquement des torons de câbles électriques acheminant l'électricité entres deux panneaux de générateur solaire. Il est ainsi possible d'obtenir une marge de motorisation quasi-constante tout au long du déploiement. Le besoin en motorisation peut alors être ajusté au strict nécessaire.

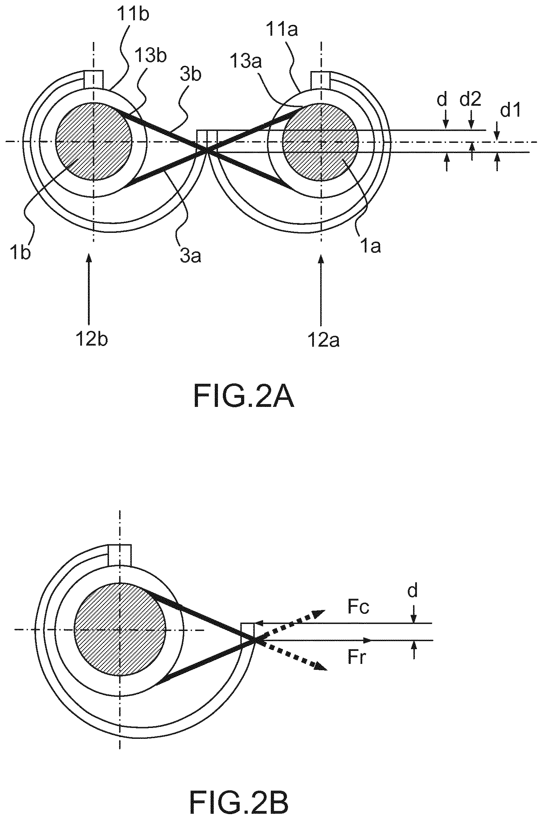

Les figures 2A et 2B présentent respectivement un schéma illustrant un dispositif de motorisation selon un exemple de réalisation de l'invention, et un bilan des efforts s'y appliquant.

Selon la présente invention, il est proposé une alternative technique à l'invention faisant l'objet de la demande de brevet FR 2968234 précitée, permettant d'augmenter le déport du point de contact P par rapport au point de croisement C en déplaçant le point de croisement C lui-même.

A cet effet, il est proposé que la circonférence du cylindre d'enroulement d'au moins une ferrure ne soit pas constante le long de l'axe longitudinal de la ferrure.

Dans l'exemple illustré par la figure 2A, chaque cylindre d'enroulement 1a, 1b est à section circulaire et est défini par un premier diamètre sur une première portion déterminée 11a, 11b, et un second diamètre sur une seconde portion déterminée 13a, 13b.

Selon une particularité de la présente invention, le point de croisement C est déporté du point de contact P par une disposition judicieuse des moyens de liaison et des portions déterminées précitées des cylindres d'enroulement. Dans l'exemple illustré par la figure, une première section linéaire 3a de l'élément de liaison s'enroule autour de la première portion 13a du premier cylindre d'enroulement 1a et sur la seconde portion 11b du second cylindre d'enroulement 1b. Toujours dans l'exemple illustré par la figure, la circonférence ou le diamètre de la seconde portion 13a du premier cylindre d'enroulement 1a est plus petite que la circonférence ou le diamètre de la première portion 11a. D'une manière analogue, la circonférence ou le diamètre de la seconde portion 13b du second cylindre d'enroulement 1b est plus petite que la circonférence ou le diamètre de la première portion 11b. Il est bien entendu que la réciproque de la proposition précédente est également envisageable.

Il est à noter que l'exemple illustré par la figure 2A n'est pas limitatif de la présente invention, et que d'autres modes de réalisation peuvent être envisagés, par exemple dans lesquels les cylindres d'enroulement comportent une pluralité supérieure à deux de portions présentant des diamètres ou circonférences différents, pour par exemple permettre un ajustement à des applications différentes désirées, à partir de pièces identiques.

D'autres modes de réalisation peuvent également être envisagés, dans lesquels les sections des diamètres sur les différentes portions ne sont pas nécessairement circulaires, afin d'ajuster la courbe de couple sur la course des éléments en mouvement.

En plus du décalage du point de croisement C ainsi obtenu via la configuration particulière donnée aux enroulements des sections linéaires 3a, 3b des moyens d'enroulement 3 formant élément de liaison entre les ferrures, un décalage additionnel peut être obtenu en décalant le point de contact P entre les pistes flexibles 2a, 2b par rapport à un plan par lequel passent les axes longitudinaux respectifs des deux ferrures, d'une manière analogue à l'invention faisant l'objet de la demande de brevet FR 2968234 précitée.

Ainsi que cela est illustré par la figure 2A, un premier décalage d'une première distance d1 entre le point de croisement C et le plan comprenant les axes de révolution des cylindres d'enroulement 1a, 1b peut être obtenu par l'enroulement des moyens d'enroulement 3 respectivement sur des diamètres différents des cylindres d'enroulement, et un second décalage d'une seconde distance d2 peut être obtenu en déportant le point de contact P entre les pistes flexibles 2a, 2b, le décalage total entre le point de contact P et le point de croisement C ayant une distance d égalant alors la somme de la première distance d1 et de la seconde distance d2.

Ainsi il est possible de configurer les moyens d'enroulement et les cylindres d'enroulement, de sorte que la valeur de la première distance d1 soit égale à une première valeur déterminée, pour contrôler le couple s'exerçant au point de contact C entre les pistes flexibles 2a, 2b.

Il est également possible de configurer en outre la forme de la section des pistes flexibles 2a, 2b, par exemple spirale, de sorte que la valeur de la seconde distance d2 soir égale à une seconde valeur déterminée, et que la somme de la première distance d1 et de la seconde distance d2 égale une valeur déterminée d permettant de contrôler le couple s'exerçant au point de contact C.

Maintenant en référence à la figure 2B, l'enroulement des moyens d'enroulement souples autour des pistes d'enroulement formées par les portions respectives des cylindres d'enroulement impose la cinématique de l'ensemble du système et partant la flèche, c'est-à-dire la déformée, des pistes flexibles tout au long du déploiement du système. Cette flèche, et donc la raideur des pistes flexibles, génère une force de contact Fc appliquée au niveau du point de contact P entre les pistes flexibles. Par réaction à la force de contact Fc, une force de réaction Fr est générée par les moyens d'enroulement.

Un dimensionnement approprié des pistes d'enroulement permet de leur conférer la raideur souhaitée et ainsi maîtriser les efforts Fc et Fr, et partant le couple généré. Il est à observer que le profil ou la forme des pistes d'enroulement peut comprendre une ou plusieurs portions de spirales et/ou arcs de cercles.

La solution proposée par la présente invention permet d'obtenir un couple adapté au juste besoin tout au long du déploiement de la structure.

## Revendications

1. Dispositif de motorisation comprenant :
• deux cylindres d'enroulement (1a,1b) sensiblement parallèles, des moyens d'enroulement formant élément de liaison de forme longitudinale, les moyens d'enroulement (3) étant aptes à maintenir une distance prédéterminée entre les deux cylindres d'enroulement (1a,1b) et étant enroulés autour les
deux cylindres d'enroulement (1a,1b), les moyens d'enroulement (3) présentant par conséquent un point de croisement (C) entre deux sections sensiblement linéaires (3a, 3b) de l'élément de liaison situées entre les deux cylindres d'enroulement (1a,1b),
• au moins deux pistes flexibles (2a,2b), un ensemble comprenant un cylindre d'enroulement des deux cylindres d'enroulement (1a, 1b) et une piste flexible (2a, 2b) formant une ferrure (12a, 12b), une piste flexible des au moins deux pistes flexibles (2a,2b) étant fixée sur chaque cylindre d'enroulement (1a,1b), les pistes flexibles (2a,2b) étant disposées en vis-à-vis et présentant un point de contact (P), un effort de précontrainte s'appliquant audit point de contact (P) des pistes flexibles (2a,2b) sous l'effet des moyens d'enroulement (3), les pistes flexibles (2a,2b) présentant une forme de spirale, la forme de la spirale étant configurée de telle manière que le point de contact (P) entre les deux pistes flexibles (2a,2b) soit excentré par rapport au point de croisement (C) des moyens d'enroulement (3), le point de contact (P) et le point de croisement (C) ne se trouvant pas alignés sur un même axe parallèle aux axes de révolution des cylindres d'enroulement (1a,1b), de sorte qu'un couple (R) dépendant de la distance (D) entre le point de contact (P) et le point de croisement (C) est appliqué, le couple (R) étant apte à provoquer la rotation des ferrures (12a, 12b) entre elles, le dispositif de motorisation étant **caractérisé en ce que** chaque cylindre d'enroulement (1a, 1b) comprend une première circonférence sur une première portion déterminée (11a, 11b), et une seconde circonférence sur une seconde portion déterminée (13a, 13b), la première circonférence de chaque cylindre d'enroulement étant différente de la seconde circonférence de chaque cylindre d'enroulement, chaque section linéaire (3a, 3b) de l'élément de liaison (3) s'enroulant sur la première portion (11a) du premier cylindre d'enroulement (1a) et sur la seconde portion (13b) du second cylindre d'enroulement (1b), ou sur la seconde portion (13a) du premier cylindre d'enroulement (1a) et sur la première portion (11b) du second cylindre d'enroulement (1b).

2. Dispositif de motorisation suivant la revendication 1, **caractérisé en ce que** ladite première portion (11a, 11b) et ladite seconde portion (13a, 13b) du premier cylindre d'enroulement (1a) et du second cylindre d'enroulement (1b) sont à circonférence circulaire.

3. Dispositif selon l'une quelconque des revendications précédentes, **caractérisé en ce que** les moyens d'enroulement et les cylindres d'enroulement sont configurés de sorte que la valeur d'une première distance (d1) entre le point de croisement (C) et un plan horizontal comprenant les axes de révolution respectifs du premier et du second cylindres d'enroulement (1a, 1b) soit égale à une première valeur déterminée, pour contrôler le couple s'exerçant au point de contact (C) entre les ferrures (12a, 12b).

4. Dispositif selon la revendication 3, **caractérisé en ce que** la forme de la spirale des pistes flexibles (2a,2b) est en outre configurée de manière à ce qu'une seconde distance (d2) entre le point de contact (P) et le plan comprenant les axes de révolution respectifs du premier et du second cylindres d'enroulement (1a, 1b) soit égale à une seconde valeur déterminée, la distance (d) égalant la somme de la première distance (d1) et de la seconde distance (d2) déterminant le couple s'exerçant sur les ferrures (12a, 12b).

5. Système déployant pour satellite artificiel, comprenant au moins un premier appendice déployable et un second appendice déployable, **caractérisé en ce qu'**il comprend en outre un dispositif de motorisation selon l'une quelconque des revendications précédentes, les appendices déployables étant fixés sur chaque ferrure (12a, 12b).

## Patentansprüche

1. Motorisierungsvorrichtung, welche Folgendes beinhaltet:
• zwei Aufrollzylinder (1a,1b), welche im Wesentlichen parallel sind, Aufrollmittel, welche ein Verbindungsmittel mit länglicher Form bilden, wobei die Aufrollmittel (3) in der Lage sind, einen vorbestimmten Abstand zwischen den beiden Aufrollzylindern (1a,1b) zu halten und um die beiden Aufrollzylinder (1a,1b) aufgerollt sind, wobei die Aufrollmittel (3) folglich einen Kreuzungspunkt (C) zwischen den beiden im Wesentlichen linearen Abschnitten (3a, 3b) des Verbindungsmittels aufweisen, welche zwischen den beiden Aufrollzylindern (1a,14b) befindlich sind,
• mindestens zwei flexible Spuren (2a,2b), eine Anordnung, welche einen Aufrollzylinder der beiden Aufrollzylinder (1a, 1 b) und eine flexible Spur (2a, 2b) beinhaltet, welche einen Aufrollbeschlag (12a, 12b) bilden, wobei eine flexible Spur der mindestens zwei flexiblen Spuren (2a,2b) an jedem Aufrollzylinder (1a,1b) befestigt ist, wobei die flexiblen Spuren (2a,2b) einander zugewandt angeordnet sind und einen Kontaktpunkt (P) aufweisen, wobei eine Vorspannkraft auf den Kontaktpunkt (P) der flexiblen Spuren (2a,2b) unter der Einwirkung der Aufrollmittel (3) aufgebracht wird, wobei die flexiblen Spuren (2a,2b) eine Spiralform aufweisen, wobei die Form der Spirale so konfiguriert ist, dass der Kontaktpunkt (P) zwischen den beiden flexiblen Spuren (2a,2b) in Bezug auf den Kreuzungspunkt (C) der Aufrollmittel (3) außermittig ist, wobei der Kontaktpunkt (P) und der Kreuzungspunkt (C) nicht auf einer gleichen Achse ausgefluchtet sind, welche parallel zu den Umdrehungsachsen der Aufrollzylinder (1a,1b) ist, so dass ein Drehmoment (R) abhängig vom Abstand (D) zwischen dem Kontaktpunkt (P) und dem Kreuzungspunkt (C) aufgebracht wird, wobei das Drehmoment (R) in der Lage ist, die Drehung der Beschläge (12a, 12b) untereinander herbeizuführen,
wobei die Motorisierungsvorrichtung **dadurch gekennzeichnet ist, dass** jeder Aufrollzylinder (1a, 1b) einen ersten Umfang über einen ersten bestimmten Abschnitt (11a, 11b) und einen zweiten Umfang über einen zweiten bestimmten Abschnitt (13a, 13b) beinhaltet, wobei der erste Umfang eines jeden Aufrollzylinders sich von dem zweiten Umfang eines jeden Aufrollzylinders unterscheidet, wobei sich jeder lineare Abschnitt (3a, 3b) des Verbindungselementes (3) auf dem ersten Abschnitt (11a) des ersten Aufrollzylinders (1a) und auf dem zweiten Abschnitt (13b) des zweiten Aufrollzylinders (1b), oder auf dem zweiten Abschnitt (13a) des ersten Aufrollzylinders (1a) und auf dem ersten Abschnitt (11b) des zweiten Aufrollzylinders (1b) aufrollt.

2. Motorisierungsvorrichtung nach Anspruch 1, **dadurch gekennzeichnet, dass** der erste Abschnitt (11a, 11b) und der zweite Abschnitt (13a, 13b) des ersten Aufrollzylinders (1a) und des zweiten Aufrollzylinders (1b) Abschnitte mit kreisförmigem Umfang sind.

3. Vorrichtung nach einem der vorhergehenden Ansprüche, **dadurch gekennzeichnet, dass** die Aufrollmittel und die Aufrollzylinder so konfiguriert sind, dass der Wert eines ersten Abstandes (d1) zwischen dem Kreuzungspunkt (C) und einer horizontalen Ebene, welche die jeweiligen Umdrehungsachsen des ersten und des zweiten Aufrollzylinders (1a, 1b) enthält, einem ersten bestimmten Wert entspricht, um das Drehmoment zu steuern, welches am Kontaktpunkt (C) zwischen den Beschlägen (12a, 12b) wirkt.

4. Motorisierungsvorrichtung nach Anspruch 3, **dadurch gekennzeichnet, dass** die Form der Spirale der flexiblen Spuren (2a,2b) zudem so konfiguriert ist, dass ein zweiter Abstand (d2) zwischen dem Kontaktpunkt (P) und der Ebene, welche die jeweiligen Umdrehungsachsen des ersten und des zweiten Aufrollzylinders (1a, 1b) enthält, einem zweiten bestimmten Wert entspricht, wobei der Abstand (d), welcher der Summe des ersten Abstandes (d1) und des zweiten Abstandes (d2) entspricht, die das auf die Beschläge (12a, 12b) wirkende Drehmoment bestimmt.

5. Ausklappbares System für einen künstlichen Satelliten, welches mindestens einen ersten ausklappbaren Ansatzteil und einen zweiten ausklappbaren Ansatzteil beinhaltet, **dadurch gekennzeichnet, dass** es zudem eine Motorisierungsvorrichtung nach einem der vorhergehenden Ansprüche beinhaltet, wobei die ausklappbaren Ansatzteile an jedem Beschlag (12a, 12b) befestigt sind.

## Claims

1. Motorization device comprising :
• two substantially parallel winding cylinders (1a, 1b), longitudinal link element-forming winding means, the winding means (3) being capable of maintaining a predetermined distance between the two winding cylinders (1a, 1b) and being wound around the two winding cylinders (1a, 1b), the winding means (3) consequently having a crossover point (C) between two substantially linear sections (3a, 3b) of the link element situated between the winding cylinders (1a, 1b),
• at least two flexible tracks (2a, 2b), an assembly comprising a winding cylinder among both winding cylinders (1a, 1b) and a flexible track (2a, 2b) forming a fitting (12a, 12b), a flexible track among the at least two flexible tracks (2a, 2b) being fixed to each winding cylinder (1a, 1b), the flexible tracks (2a, 2b) being arranged facing one another and having a point of contact (P), a prestressing force being applied at said point of contact (P) of the flexible tracks (2a, 2b) under the effect of the winding means (3), the flexible tracks (2a, 2b) having a spiral form, the form of the spiral being configured in such a way that the point of contact (P) between the two flexible tracks (2a,2b) is eccentric relative to the crossover point (C) of the winding means (3), the point of contact (P) and the crossover point (C) not being aligned on one and the same axis parallel to the axes of revolution of the winding cylinders (1a, 1b), so that a torque (R) dependent on the distance (D) between the point of contact (P) and the crossover point (C) is applied, the torque (R) being able to provoke the mutual rotation of the fittings (12a, 12b),
the motorization device being **characterized in that** each winding cylinder (1a, 1b) has a first circumference over a determined first portion (11a, 11b), and a second circumference over a determined second portion (13a, 13b),
the first circonference of each winding cylinder being different from the second circonference of each winding cylinder, each linear section (3a, 3b) of the link element (3) winding on the first portion (11a) of the first winding cylinder (1a) and on the second portion (13b) of the second winding cylinder (1b), or on the second portion (13a) of the first winding cylinder (1a) and on the first portion (11b) of the second winding cylinder (1b).

2. Motorization device according to Claim 1, **characterized in that** said first portion (11a, 11b) and said second portion (13a, 13b) of the first winding cylinder (1a) and of the second winding cylinder (1b) have a circular circumference.

3. Device according to any one of the preceding claims, **characterized in that** the winding means and the winding cylinders are configured such that the value of a first distance (d1) between the crossover point (C) and a horizontal plane comprising the respective axes of revolution of the first and second winding cylinders (1a, 1b) is equal to a determined first value, for controlling the torque that is exerted at the point of contact (C) between the fittings (12a, 12b).

4. Device according to Claim 3, **characterized in that** the form of the spiral of the flexible tracks (2a, 2b) is also configured in such a way that a second distance (d2) between the point of contact (P) and the plane comprising the respective axes of revolution of the first and of the second winding cylinders (1a, 1b) is equal to a determined second value, the distance (d) equalling the sum of the first distance (d1) and of the second distance (d2) determining the torque that is exerted on the fittings (12a, 12b).

5. Deploying system for man-made satellite, comprising at least one first deployable appendage and one second deployable appendage, **characterized in that** it also comprises a motorization device according to any one of the preceding claims, the deployable appendages being fixed to each fitting (12a, 12b).
